# EUROPEAN PATENT SPECIFICATION

(11) **EP 1 934 268 B1**
(45) Date of publication and mention of the grant of the patent: **19.08.2015**
(21) Application number: 06798745.3
(22) Date of filing: 12.09.2006
(51) Int. Cl.: C08F 214/06, C08F 2/18, C08L 27/06

(54) **METHOD OF PREPARING VINYLCHLORIDE-BASED COPOLYMER AND VINYLCHLORIDE PLASTISOL COMPOSITION INCLUDING VINYLCHLORIDE-BASED COPOLYMER PREPARED USING THE METHOD**
VERFAHREN ZUR HERSTELLUNG EINES COPOLYMERS AUF VINYLCHLORIDBASIS UND NACH DIESEM VERFAHREN HERGESTELLTES COPOLYMER AUF VINYLCHLORIDBASIS ENTHALTENDE VINYLCHLORIDPLASTISOLZUSAMMENSETZUNG
PROCEDE DE FABRICATION D'UN COPOLYMERE A BASE DE CHLORURE DE VINYLE ET COMPOSITION DE PLASTISOL DE CHLORURE DE VINYLE COMPORTANT LE COPOLYMERE A BASE DE CHLORURE DE VINYLE OBTENU PAR LEDIT PROCEDE

(30) Priority: 13.09.2005 KR 20050085188; 05.09.2006 KR 20060085283
(43) Date of publication of application: 25.06.2008
(73) Proprietor: LG Chem, Ltd., Youngdungpo-gu, Seoul 150-721 (KR)
(72) Inventor: KIM, Kyung-Hyun, Seoul 158-754 (KR); KIM, YongDeuk, R&D Organization 104-1, Moonji-dong Yuseong-gu, Daejon, 305-380 (KR); YIM, Jea-Seok, Seoul 143-888 (KR); KIM, Yu-Na, Daejeon-city 302-120 (KR)
(74) Representative: Goddar, Heinz J.
(86) International application number: PCT/KR2006/003617
(87) International publication number: WO 2007/032630

(56) References cited:
- DE-A1- 2 621 742
- GB-A- 1 370 412
- JP-A- 58 007 408
- JP-A- 60 235 807
- US-A- 3 049 521
- US-A- 3 511 822
- US-A- 3 558 578
- US-A- 3 833 541
- US-A- 4 330 653
- US-A- 4 525 559
- US-A- 4 540 759

## Description

### Technical Field

The present invention relates to a method of preparing a vinylchloride-based copolymer for plastisol processing, which has a fine particle size, a uniform particle size distribution, and a good low-temperature melting property, and thus can produce a vinylchloride-based plastisol with excellent processability at a low temperature.

### Background Art

Polyvinylchlorides (PVCs) are general-purpose resins that are widely used in the world as ordinary household and industrial materials. Straight PVCs are prepared by suspension polymerization of powder particles with a particle size of about 100∼200 µm, and paste PVCs are prepared by emulsion polymerization of powder particles with a particle size of about 0.1∼2 µm. Generally, with respect to paste PVCs, latexes made by emulsion polymerization are spray-dried to produce final resin particles with a particle size of 5µm or more. Paste resins thus produced are dispersed in a solvent or a plasticizer, and the dispersions are processed by coating (e.g., reverse roll-coating, knife coating, screen coating, or spray coating), gravure or screen printing, rotation casting, shell casting, or dipping, into products such as floorings, wallpapers, tarpaulins, rainwear, gloves, underbody coatings applied to automobile underbodies, and carpet tiles.

Paste PVCs, together with a common plasticizer, are processed into plastisols including various additives such as a thermal stabilizer. At this time, it is important to enhance the flowability of the sols by decreasing the viscosities of the sols to achieve good processability.

Conventionally, in order to achieve good processability by decreasing the viscosity of a sol and enhancing the flowability of the sol, a method of mixing 10-20% of PVC with a particle size of 30 ∼ 40 µm produced by suspension polymerization with a paste PVC plastisol has been suggested. The PVC with a particle size of 30 - 40 µm produced by suspension polymerization for the above purposes is commonly known as filler PVC (also called blend resin or extender resin ). The PVC resin is a homopolymer of vinylchloride monomers or a copolymer of a vinylchloride monomer and a vinylacetate or acrylate-based comonomer. Filler PVC (extender resin, blend resin) must have low absorptivity of a plasticizer or a solvent and a uniform particle size distribution in order to show a good flowing behavior under a high or low shearing force during sol processing, i.e., to decrease the viscosity of the sol. As such, the reason why it is important to appropriately control the particle size and particle size distribution which are physical properties of filler PVC is that filler PVC with a particle size of 30 ∼ 40µm is optimal for uniformly forming a coating layer or film having a thin thickness of about 50µm or less using a paste sol in a coating process or a film-forming process such as flooring coating, can coating, wallpaper production, or underbody spray coating for automobiles. If the content of PVC with a particle size of less than 30 µm is high, a viscosity reduction effect may be insufficient, thereby lowering the processability of plastisol. On the other hand, if the content of PVC with a particle size of more than 40 µm is high, the uniformity and stability of a coating layer or film may be lowered, thereby lowering the quality of final products.

A vinylchloride polymer resin or vinylchloride-based copolymer resin for plastisol processing as described above is generally prepared by suspension polymerization or copolymerization using a dispersant such as polyvinylalcohol (PVA), cellulose, or gelatin. However, when using a dispersant, the particle size and particle size distribution of a produced polymer or copolymer may vary according to the stability of a protective colloid.

Meanwhile, in the case of preparing a sol for underbody coating of automobiles or carpet tiles using a paste resin for purposes of dustproof, anticorrosion, and wear resistance, in view of reduction of energy costs, attempts have been made to enhance low-temperature processability and wear resistance by changing the composition of a resin using a low-temperature curing agent. However, final products produced using a low-temperature curing agent are less durable and fragile.

### Disclosure of Invention

### Technical Problem

While searching for a solution to the above problems, the present inventors found that the stability of a protective colloid formed by a dispersant was increased by appropriately adjusting the pH of a reaction solution during initial polymerization, and the low-temperature melting property of a vinylchloride-based copolymer resin was enhanced by using a comonomer with a low glass transition temperature, and thus completed the present invention.

### Technical Solution

The present invention provides a method of effectively preparing a vinylchloride-based copolymer that is excellent in low-temperature melting property and has a particle size of 30 to 40µm and a narrow particle size distribution, and thus, can be used as a blend resin for a vinylchloride-based plastisol composition with excellent processability at a low temperature.

The present invention also provides a vinylchloride-based plastisol composition with good processability at a low temperature and low viscosity.

According to an aspect of the present invention, there is provided a method of preparing a vinylchloride-based copolymer for plastisol processing, which includes adding a buffer having a buffer range of pH 4-10 at an initial stage of suspension copolymerization of a vinylchloride monomer and comonomer in the presence of a dispersant and a polymerization initiator.

The buffer may be at least one selected from the group consisting of NaHCO₃, Na₂B₄ O₇, KH₃C₄O₈, KHC₄H₄O₆, KHC₈H₄O₄, Ca(OH)₂, KH₂PO₄, Na₂CO₃, Na₂HPO₄, and NH₄ OH.

The comonomer may be used in an amount of 0.1 to 20 parts by weight based on 100 parts by weight of the vinylchloride monomer.

The buffer may be used in an amount of 0.001 to 0.04 parts by weight based on 100 parts by weight of the vinylchloride monomer.

According to another aspect of the present invention, there is provided a vinylchloride-based plastisol composition including: a paste PVC resin; a plasticizer; and a vinylchloride-based copolymer prepared using the method and having a particle size of 30 ∼ 40 µm.

A vinylchloride-based copolymer prepared by a method according to the present invention has a particle size of 30-40µm and a uniform particle size distribution and is excellent in low-temperature melting property. Thus, when the vinylchloride-based copolymer is used as a blend resin, it is possible to obtain a plastisol composition with good processability at a low temperature and a low viscosity.

The present invention will now be described more fully with reference to the accompanying drawings, in which exemplary embodiments of the invention are shown.

The present invention relates to a method of preparing a vinylchloride-based copolymer resin for a vinylchloride-based plastisol that can be processed at a lower temperature than a conventional processing temperature and thus can achieve an energy reduction effect to produce products requiring low-temperature melting properties and dustproof, anticorrosion, and wear resistance characteristics. Thus, the present invention provides a method of preparing a vinylchloride-based copolymer, which includes adding a buffer having a buffer range of pH 4-10 at an initial stage of suspension copolymerization of a vinylchloride monomer and a vinylacetate or methacrylate-based comonomer in the presence of a dispersant and a polymerization initiator.

As used herein, the term vinylchloride-based copolymer (resin) refers to a resin for which the final content of vinylchloride ranges from 50 to 97 wt%.

In the present invention, in order to allow the vinylchloride-based copolymer resin for plastisol processing to have a low-temperature melting property, the vinyl acetate or the methacrylate-based comonomer is added to the vinylchloride monomer, and the mixture is suspension-copolymerized. Generally, the glass transition temperature of the comonomer is from -50 to 40°C.

The methacrylate-based comonomer may be at least one selected from the group consisting of methyl acrylate, ethyl acrylate, n-propyl acrylate, isopropyl acrylate, n-butyl (meth)acrylate, sec-butyl acrylate, isobutyl acrylate, cumyl acrylate, n-hexyl (meth)acrylate, n-heptyl (meth)acrylate, n-octyl (meth)acrylate, 2-ethylhexyl (meth)acrylate, 2-methylheptyl (meth)acrylate, n-decyl (meth)acrylate, lauryl (meth)acrylate, cyclohexyl (meth)acrylate, myrystyl (meth)acrylate, n-nonyl (meth)acrylate, palmityl (meth)acrylate, stearyl (meth)acrylate, 2-hydroxyethyl acrylate, 2-hydroxypropyl acrylate, and a mixture thereof.

The vinylacetate or methacrylate-based comonomer may be used in an amount of 0.1 to 20 parts by weight based on 100 parts by weight of the vinylchloride monomer. If the content of the vinylacetate or methacrylate-based comonomer is less than 0.1 parts by weight, it may be difficult to achieve low-temperature processability. On the other hand, if it exceeds 20 parts by weight, production costs and relative loss of the comonomer may increase.

In the present invention, the buffer added at the initial stage of the suspension copolymerization to allow the vinylchloride-based copolymer for plastisol processing to have a small particle size and a uniform particle size distribution has a buffer range of pH 4 to 10, and may be at least one selected from the group consisting of NaHCO₃, Na₂B₄O₇, Na₂HPO₄, Na₂CO₃, KH₂PO₄, KH₃C₄O₈, NH₄OH, KHC₄H₄O₆, KHC₈H₄O₄, and Ca(OH)₂.

The buffer may be used in an amount of 0.001 to 0.04 parts by weight based on 100 parts by weight of the vinylchloride monomer. If the content of the buffer is less than 0.001 parts by weight, it may be difficult to adjust the pH of a reaction solution at the initial stage of the suspension copolymerization, thereby rendering the stabilization of colloid difficult. Therefore, it is difficult to achieve an appropriate particle size and a uniform particle size distribution. On the other hand, if it exceeds 0.04 parts by weight, the processability for a final product may be poor.

The dispersant used in the preparation of the vinylchloride-based copolymer according to the present invention serves to enhance suspension stability, thereby efficiently performing the suspension copolymerization. The dispersant that can be used herein may be a partially saponified vinylacetate polymer, cellulose hydroxide, gelatin, an acrylate or acrylate copolymer, polyethyleneglycol, polyvinylpyrrolidone, or a copolymer of anhydrous maleic acid and styrene. These dispersants may be used alone or in combination of two or more thereof. More preferably, the dispersant may be a partially saponified vinylacetate polymer having a degree of saponification of 70∼90 mole% and the viscosity of a 4 wt% aqueous solution of 30∼60 cps or cellulose hydroxide or gelatin having the viscosity of a 2 wt% aqueous solution of 1,000 mPas (cps).
The content of the dispersant may be 0.1 to 0.8 parts by weight based on 100 parts by weight of the vinylchloride monomer added to a reactor for the suspension copolymerization. If the content of the dispersant is less than 0.1 parts by weight, the stability of resin particles in a reactor may be lowered, and thus, large particles with a particle size of 100µm or more may be formed, which makes it difficult to use a resultant PVC-based polymer as a resin for plastisol processing. On the other hand, if it exceeds 0.8 parts by weight, fine particles with a particle size of 10µm or less may be excessively formed, thereby lowering a viscosity reduction effect for a final resin product.

The polymerization initiator that can be used in the suspension copolymerization for the preparation of the vinylchloride-based copolymer according to the present invention may be a water-soluble compound such as potassium persulfate, ammonium persulfate, or hydrogen peroxide; an organic peroxide-based compound such as benzoyl peroxide, lauryl peroxide, acetyl cyclohexanol peroxide, 2,4,4-trimethylpentyl-2-peroxy neodecanoate, -cumyl peroxy neodecanoate, dibutyl peroxy dicarbonate, cumene hydroperoxide, or t-butyl hydroxy peroxide; or an azo-based compound such as azobisisobutyronitrile or azobis-2,4-dimethyl valero nitrile.

Suspension copolymerization according to the present invention will now be described in detail. Vacuum pressure is applied to a reactor to remove oxygen in the reactor. Then, water for polymerization, a buffer, a comonomer, an initiator, and a dispersant are added all at once to the reactor, and a vinylchloride monomer is then added to the reactor at once, batchwise, or continuously. The reaction mixture is heated to a predetermined temperature and incubated at the same temperature, and an unreacted residual vinylchloride monomer is recovered. The residue is removed from the reactor, dehydrated, and hot-air dried to obtain a vinylchloride-based copolymer resin for plastisol processing with a good low-temperature melting property.

The vinylchloride-based copolymer resin prepared according to the method of the present invention is mixed with a plastisol including a PVC resin and a plasticizer to obtain a plastisol composition.

The plastisol composition may include 10 to 30 parts by weight of the vinylchloride-based copolymer resin based on 100 parts by weight of the PVC resin. If the content of the vinylchloride-based copolymer resin is less than 10 parts by weight, it may be difficult to achieve low-temperature processablity. On the other hand, if it exceeds 30 parts by weight, the inherent characteristics of the plastisol may be lowered due to an excessive presence of the vinylchloride-based copolymer resin.

The plastisol composition of the present invention has excellent processability at a low temperature and a low viscosity, and thus, can be easily processed into products.

### Advantageous Effects

As described above, according to the present invention, a comonomer with a low glass transition temperature and a vinylchloride monomer are added all at once, batchwise, or continuously to perform suspension copolymerization, thereby allowing a PVC-based polymer to have a low-temperature melting property. Furthermore, an initial pH is adjusted to an appropriate value by adding a buffer at an initial stage of polymerization, thereby maintaining the stability of a protective colloid of a dispersant. Therefore, it is possible to prepare a vinylchloride-based copolymer resin for plastisol processing with an appropriate particle size, a narrow particle size distribution, and a good low-temperature melting property. A plastisol including the vinylchloride-based copolymer resin as a blend resin can be used to produce products requiring dustproof, anticorrosion, and wear resistance characteristics.

### Brief Description of Drawings

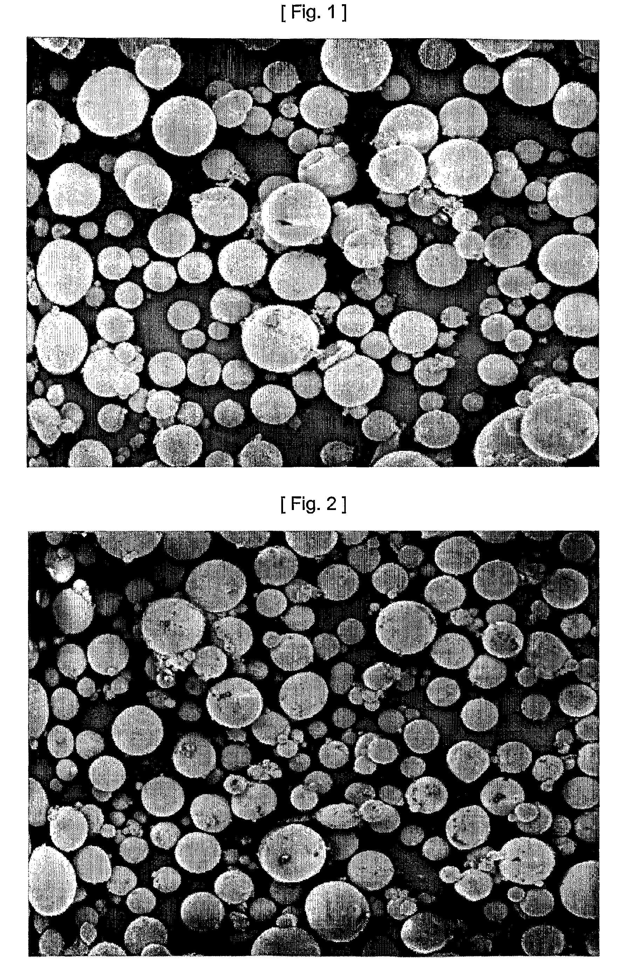

FIGS. 1 through 4 are respectively electron microscopic images showing vinylchloride-based copolymer resins prepared in Examples 1-3 and a PVC resin prepared in Comparative Example 1.

### Mode for the Invention

Hereinafter, the present invention will be described more specifically with reference to the following examples. The following examples are for illustrative purposes only and are not intended to limit the scope of the invention.

### Examples

### Example 1

0.6 parts by weight of a cellulose-based dispersant, 5.0 parts by weight of vinylacetate used as a comonomer, and polymerization initiators, i.e., 0.02 parts by weight of bis(2-ethylhexyl) peroxy dicarbonate and 0.26 parts by weight of t-butyl peroxy pivalate, and 0.015 parts by weight of NaHCO₃ used as a buffer, together with 250 parts by weight of deionized water, were added all at once to a 1,000 L high-pressure reactor, and vacuum pressure was applied thereto. Then, 50 parts by weight of a vinylchloride monomer was added to the reactor while stirring, and the reaction mixture was incubated at 60°C to perform polymerization. 50 parts by weight of the vinylchloride monomer was further added to the reactor during the polymerization, and the resultant solution was incubated until the pressure of the reactor reached 3.5 kgf/cm ². After the reaction was terminated, an unreacted vinylchloride monomer was recovered and removed, and the residue was cooled, dehydrated, and dried to obtain a PVC-based copolymer resin for plastisol processing.

### Example 2

0.6 parts by weight of a cellulose-based dispersant, 10.0 parts by weight of vinylacetate used as a comonomer, and polymerization initiators, i.e., 0.02 parts by weight of bis(2-ethylhexyl) peroxy dicarbonate and 0.26 parts by weight of t-butyl peroxy pivalate, and 0.015 parts by weight of NaHCO₃ used as a buffer, together with 250 parts by weight of deionized water, were added all at once to a 1,000 L high-pressure reactor, and vacuum pressure was applied thereto. Then, 50 parts by weight of a vinylchloride monomer was added to the reactor while stirring, and the reaction mixture was incubated at 60°C to perform polymerization. 50 parts by weight of the vinylchloride monomer was further added during the polymerization, and the resultant solution was incubated until the pressure of the reactor reached 3.5 kgf/cm². After the reaction was terminated, an unreacted vinylchloride monomer was recovered and removed, and the residue was cooled, dehydrated, and dried to obtain a vinylchloride-based copolymer resin for plastisol processing.

### Example 3

0.6 parts by weight of a cellulose-based dispersant, 10.0 parts by weight of buty-laciylate used as a comonomer, and polymerization initiators, i.e., 0.02 parts by weight of bis(2-ethylhexyl) peroxy dicarbonate and 0.26 parts by weight of t-butyl peroxy pivalate, and 0.015 parts by weight of NaHCO₃ used as a buffer, together with 250 parts by weight of deionized water, were added all at once to a 1,000 L high-pressure reactor, and vacuum pressure was applied thereto. Then, 50 parts by weight of a vinylchloride monomer was added to the reactor while stirring, and the reaction mixture was incubated at 60°C to perform polymerization. 50 parts by weight of the vinylchloride monomer was further added during the polymerization, and the resultant solution was incubated until the pressure of the reactor reached 3.5 kgf/cm². After the reaction was terminated, an unreacted vinylchloride monomer was recovered and removed, and the residue was cooled, dehydrated, and dried to obtain a vinylchloride-based copolymer resin for plastisol processing.

### Comparative Example 1

0.6 parts by weight of a cellulose-based dispersant, and polymerization initiators, i.e., 0.02 parts by weight of bis(2-ethylhexyl) peroxy dicarbonate and 0.26 parts by weight of t-butyl peroxy pivalate, together with 250 parts by weight of deionized water, were added all at once to a 1,000 L high-pressure reactor, and vacuum pressure was applied thereto. Then, 50 parts by weight of a vinylchloride monomer was added to the reactor while stirring, and the reaction mixture was incubated at 60°C to perform polymerization. 50 parts by weight of the vinylchloride monomer was further added during the polymerization, and the reaction solution was incubated until the pressure of the reactor reached 3.5 kgf/cm². After the reaction was terminated, an unreacted vinylchloride monomer was recovered and removed, and the residue was cooled, dehydrated, and dried to obtain a PVC resin for plastisol processing.

The average particle sizes and particle size distributions of the vinylchloride-based copolymer resins prepared in Examples 1-3 and the PVC resin prepared in Comparative Example 1 are summarized in Table 1 below.

Table 1

**[Table 1]**

| Section | Example 1 | Example 2 | Example 3 | Comparative Example 1 |
|---|---|---|---|---|
| Average particle size (µm) | 33 | 34 | 35 | 34 |
| Particle size distribution | 1.10 | 1.09 | 1.08 | 1.62 |
| Content of particles with a particle size of 149µm or more (%) | 0.0 | 0.0 | 0.1 | 5.4 |

As shown in Table 1, when a buffer is added at an initial stage of polymerization, it is possible to produce a vinylchloride copolymer with a uniform particle size distribution, no large-sized particles, and an average particle size of 30 to 40µm.

Meanwhile, the melting temperatures of the vinylchloride-based copolymer resins prepared in Examples 1-3 and the PVC resin prepared in Comparative Example 1 were measured using a rheometrics mechanical spectrometer (RMS), and the results are presented in Table 2 below.

Table 2

**[Table 2]**

| | Example 1 | Example 2 | Example 3 | Comparative Example 1 |
|---|---|---|---|---|
| Melting temperature (°C) | 178.1 | 178.0 | 178.3 | 182.4 |

As shown in Table 2, the vinylchloride-based copolymer resins prepared according to the present invention had excellent in low-temperature melting properties.

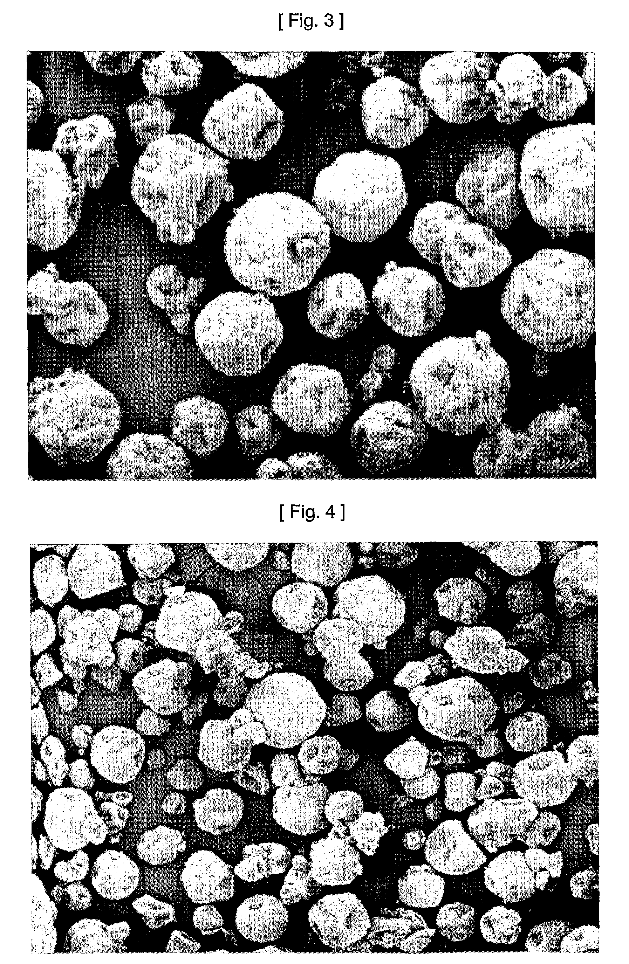

Electron microscopic images of the vinylchloride-based copolymer resins prepared in Examples 1-3 and the PVC resin prepared in Comparative Example 1 are shown in FIGS. 1 through 4. FIG. 1 shows the electron microscopic image of the vinylchloride-based copolymer resin prepared in Example 1, FIG. 2 shows the electron microscopic image of the vinylchloride-based copolymer resin prepared in Example 2, FIG. 3 shows the electron microscopic image of the vinylchloride-based copolymer resin prepared in Example 3, and FIG. 4 shows the electron microscopic image of the PVC resin prepared in Comparative Example 1. Referring to FIGS. 1 through 4, the vinylchloride-based copolymer resins prepared in Examples 1-3 exhibited a more uniform particle size distribution than the PVC resin prepared in Comparative Example 1.

100 parts by weight of a paste PVC resin (paste PVC resin, manufactured by LG), 10-20 parts by weight of each of the vinylchloride-based copolymer resins prepared in Examples 1-3 and the PVC resin prepared in Comparative Example 1, and 120-150 parts by weight of a plasticizer were mixed to produce sol compositions, and the sols were incubated at 25°C. The Brookfield viscosities of the resultant sol compositions were measured and the results are presented in Table 3 below.

Table 3

**[Table 3]**

| | Example 1 | Example 2 | Example 3 | Comparative Example 1 |
|---|---|---|---|---|
| Viscosity of plastisol^{(mPas (cps))} | 2,100 | 2,050 | 2,210 | 2,800 |

As shown in Table 3, when a vinylchloride-based copolymer prepared by a method of the present invention is used as a blend resin to prepare a plastisol, the viscosity of the plastisol is decreased. Furthermore, a plastisol with excellent processability at a low temperature can be obtained.

## Claims

1. A method of preparing a vinyl chloride-based copolymer with an average particle size of 30-40 µm and a final content of vinyl chloride monomer of 50 to 97 weight percent of all monomers, the method comprising the suspension copolymerization steps of:
applying vacuum pressure to a polymerization reactor;
adding at once into a polymerization reactor, water, a buffer, a polymerization initiator, a dispersant and a vinyl acetate or a methacrylate comonomer;
adding vinyl chloride to the reactor at once, batchwise or continuously,
heating the reaction mixture in the reactor to a predetermined temperature and incubating the reaction mixture at the same temperature;
recovering the unreacted residual vinyl chloride monomer; and
dehydrating and hot-air drying the reaction mixture to obtain a vinyl chloride-based copolymer resin
wherein said buffer is added to adjust the pH of the reaction mixture to 4-10, said buffer being at least one selected from the group consisting of NaHCO₃, Na₂B₄O₇, KH₃C₄O₈, KHC₄H₄O₆, KHC₈H₄O₄, Ca(OH)₂, KH₂PO₄, Na₂CO₃, Na₂HPO₄, and NH₄OH.

2. The method of claim 1, wherein the dispersant is used in an amount of 0.1 to 0.8 parts by weight based on 100 parts by weight of the vinyl chloride monomer.

3. The method of claim 1, wherein the vinyl acetate or methacrylate-based comonomer is used in an amount of 0.1 to 20 parts by weight based on 100 parts by weight of the vinyl chloride monomer.

4. The method of claim 1, wherein the buffer is used in an amount of 0.001 to 0.04 parts by weight based on 100 parts by weight of the vinyl chloride monomer.

5. A vinyl chloride plastisol composition comprising:
a paste PVC resin;
a plasticizer; and
a vinyl chloride-based copolymer having an average particle size of 30 - 40 µm prepared using the method according to claim 1.

6. The vinyl chloride plastisol composition of claim 5, wherein the dispersant is used in an amount of 0.1 to 0.8 parts by weight based on 100 parts by weight of the vinyl chloride monomer.

7. The vinyl chloride plastisol composition of claim 5, wherein the vinyl acetate or methacrylate-based comonomer is used in an amount of 0.1 to 20 parts by weight based on 100 parts by weight of the vinyl chloride monomer.

8. The vinyl chloride plastisol composition of claim 5, wherein the buffer is used in an amount of 0.001 to 0.04 parts by weight based on 100 parts by weight of the vinyl chloride monomer.

9. The vinyl chloride plastisol composition of claim 5, wherein the vinyl chloride-based copolymer is used in an amount of 10 to 30 parts by weight based on 100 parts by weight of the paste PVC resin.

## Patentansprüche

1. Verfahren zum Herstellen eines Copolymers auf Vinylchloridbasis mit einer durchschnittlichen Teilchengröße von 30-40µm und einem Endgehalt an Vinylchloridmonomer von 50 bis 97 Gewichtsprozent aller Monomere, wobei das Verfahren die Suspensionscopolymerisationsschritte umfasst:
Beaufschlagen eines Vakuumdrucks auf einen Polymerisationsreaktor;
einmaliges Zufügen in einen Polymerisationsreaktor von Wasser, einem Puffer, einem Polymerisationsinitiator, einem Dispersionsmittel und einem Vinylacetat- oder einem Methacrylatcomonomer;
einmaliges, chargenweises oder kontinuierliches Zufügen von Vinylchlorid zu dem Reaktor,
Erwärmen der Reaktionsmischung in dem Reaktor auf eine vorgegebene Temperatur und Inkubieren der Reaktionsmischung bei der gleichen Temperatur;
Wiedergewinnen des nicht umgesetzten restlichen Vinylchloridmonomers;
Dehydrieren und Heißlufttrocknen der Reaktionsmischung, um ein Copolymerharz auf Vinylchloridbasis zu erhalten,
wobei der Puffer zugegeben wird, um den pH-Wert der Reaktionsmischung auf 4-10 einzustellen, wobei der Puffer wenigstens einer ist, der ausgewählt ist aus der Gruppe bestehend aus NaHCO₃, Na₂B₄O₇, KH₃C₄O₈, KHC₄H₄O₆, KHC₈H₄O₄, Ca(OH)₂, KH₂PO₄, Na₂CO₃, Na₂HPO₄ und NH₄OH.

2. Verfahren nach Anspruch 1, wobei das Dispersionsmittel in einer Menge von 0,1 bis 0,8 Gewichtsteilen, basierend auf 100 Gewichtsteilen des Vinylchloridmonomers, verwendet wird.

3. Verfahren nach Anspruch 1, wobei das Vinylacetat- oder Methacrylat-basierte Comonomer in einer Menge von 0,1 bis 20 Gewichtsteilen, basierend auf 100 Gewichtsteilen des Vinylchloridmonomers, verwendet wird.

4. Verfahren nach Anspruch 1, wobei der Puffer in einer Menge von 0,001 bis 0,04 Gewichtsteilen, basierend auf 100 Gewichtsteilen des Vinylchloridmonomers, verwendet wird.

5. Vinylchloridplastisolzusammensetzung, welche umfasst:
ein pastenartiges PVC-Harz;
einen Weichmacher; und
ein Copolymer auf Vinylchloridbasis mit einer durchschnittlichen Teilchengröße von 30-40µm, hergestellt unter Verwendung des Verfahrens nach Anspruch 1.

6. Vinylchloridplastisolzusammensetzung nach Anspruch 5, wobei das Dispersionsmittel in einer Menge von 0,1 bis 0,8 Gewichtsteilen, basierend auf 100 Gewichtsteilen des Vinylchloridmonomers, verwendet wird.

7. Vinylchloridplastisolzusammensetzung nach Anspruch 5, wobei das Vinylacetat- oder Methacrylat-basierte Comonomer in einer Menge von 0,1 bis 20 Gewichtsteilen, basierend auf 100 Gewichtsteilen des Vinylchloridmonomers, verwendet wird.

8. Vinylchloridplastisolzusammensetzung nach Anspruch 5, wobei der Puffer in einer Menge von 0,001 bis 0,04 Gewichtsteilen, basierend auf 100 Gewichtsteilen des Vinylchloridmonomers, verwendet wird.

9. Vinylchloridplastisolzusammensetzung nach Anspruch 5, wobei das Copolymer auf Vinylchloridbbasis in einer Menge von 10 bis 30 Gewichtsteilen, basierend auf 100 Gewichtsteilen des pastenartigen PVC-Harzes, verwendet wird.

## Revendications

1. Procédé de préparation d'un copolymère à base de chlorure de vinyle d'une granulométrie moyenne de 30 à 40 µm et d'une teneur finale en monomère de chlorure de vinyle de 50 à 97 pour cent en poids de tous les monomères, le procédé comprenant les étapes de copolymérisation en suspension consistant à :
appliquer une pression sous vide à un réacteur de polymérisation ;
ajouter en même temps de l'eau, un tampon, un initiateur de polymérisation, un agent dispersant et un comonomère d'acétate de vinyle ou de méthacrylate au réacteur de polymérisation;
ajouter en même temps, en lots ou de manière continue du chlorure de vinyle au réacteur,
chauffer le mélange de réaction dans le réacteur jusqu''à une température prédéterminée et incuber le mélange de réaction à la même température ;
récupérer le monomère de chlorure de vinyle résiduel qui n'a pas réagi ; et
déshydrater et sécher à l'air chaud le mélange de réaction pour obtenir une résine de copolymère à base de chlorure de vinyle
dans lequel ledit tampon est ajouté pour ajuster le pH du mélange de réaction à entre 4 et 10, lequel tampon est au moins un tampon sélectionné dans le groupe constitué de NaHCO₃, Na₂B₄O₇, KH₃C₄O₈, KHC₄H₄O₆, KHC₈H₄O₄, Ca(OH)₂, KH₂PO₄, Na₂CO₃, Na₂HPO₄ et NH₄OH.

2. Procédé selon la revendication 1, dans lequel l'agent dispersant est utilisé en une quantité de 0,1 à 0,8 parties en poids par rapport à 100 parties en poids du monomère de chlorure de vinyle.

3. Procédé selon la revendication 1, dans lequel le comonomère d'acétate de vinyle ou de méthacrylate est utilisé en une quantité de 0,1 à 20 parties en poids par rapport à 100 parties en poids du monomère de chlorure de vinyle.

4. Procédé selon la revendication 1, dans lequel le tampon est utilisé en une quantité de 0,001 à 0,04 parties en poids par rapport à 100 parties en poids du monomère de chlorure de vinyle.

5. Composition de plastisol de chlorure de vinyle comprenant :
une résine de PVC en pâte ;
un agent plastifiant ; et
un copolymère à base de chlorure de vinyle d'une granulométrie moyenne de 30 à 40 µm préparé en utilisant le procédé selon la revendication 1.

6. Composition de plastisol de chlorure de vinyle selon la revendication 5, dans laquelle l'agent dispersant est utilisé en une quantité de 0,1 à 0,8 parties en poids par rapport à 100 parties en poids du monomère de chlorure de vinyle.

7. Composition de plastisol de chlorure de vinyle selon la revendication 5, dans laquelle le comonomère à base d'acétate de vinyle ou de méthacrylate est utilisé en une quantité de 0,1 à 20 parties en poids par rapport à 100 parties en poids du monomère de chlorure de vinyle.

8. Composition de plastisol de chlorure de vinyle selon la revendication 5, dans laquelle le tampon est utilisé en une quantité de 0,001 à 0,04 parties en poids par rapport à 100 parties en poids du monomère de chlorure de vinyle.

9. Composition de plastisol de chlorure de vinyle selon la revendication 5, dans laquelle le copolymère à base de chlorure de vinyle est utilisé en une quantité de 10 à 30 parties en poids par rapport à 100 parties en poids de la pâte de résine de PVC.
